(19) Europäisches Patentamt

European Patent Office

Office européen des brevets

(11) Publication number: **0 097 160**
**B1**

(12) **EUROPEAN PATENT SPECIFICATION**

(45) Date of publication of patent specification: **23.09.87**

(21) Application number: **82900598.2**

(22) Date of filing: **30.12.81**

(86) International application number:
**PCT/US81/01779**

(87) International publication number:
**WO 83/02244 07.07.83 Gazette 83/16**

(51) Int. Cl.⁴: **B 22 F 1/00, B 22 F 9/24, C 09 D 5/24**

(54) **NOBLE METAL FLAKE POWDER COMPOSITION AND PROCESS.**

(43) Date of publication of application:
**04.01.84 Bulletin 84/01**

(45) Publication of the grant of the patent:
**23.09.87 Bulletin 87/39**

(84) Designated Contracting States:
**CH DE FR GB LI NL**

(56) References cited:
**DE-A-2 219 531**
**JP-A-54 121 270**
**US-A-2 839 378**
**US-A-3 684 484**
**US-A-3 811 906**
**US-A-3 816 097**
**US-A-3 820 979**
**US-A-3 856 507**
**US-A-3 992 197**
**US-A-4 032 332**
**US-A-4 273 583**
**US-A-4 319 920**
**US-A-4 321 087**

**The file contains technical information submitted after the application was filed and not included in this specification**

(73) Proprietor: **ERCON, INCORPORATED**
**26 Emerson Road**
**Waltham, MA 02154 (US)**

(72) Inventor: **EHRREICH, John E.**
**34 Grove Street**
**Wayland, MA 01778 (US)**

(74) Representative: **Warren, Anthony Robert et al**
**BARON & WARREN 18 South End Kensington**
**London W8 5BU (GB)**

Courier Press, Leamington Spa, England.

# 0 097 160

**Description**

This invention relates to new forms of metal powder, characterised by an extremely thin, flake-shaped structure. The powder is characterised by an ability to impart good electrically-conductive properties to metal filled, organic-resin matrices at unprecedented low levels of filler loading. The invention is particularly, though not exclusively, applicable to silver powder.

It is already known in the art (see e.g. US—A—4273583) to provide silver flake materials for use as conductive powders in filling such organic resin-based matrix material as polyolefins, polyester, acrylic resins, epoxy and polyurethane resins, polyvinyl chloride, silicone resins, and the like. Indeed silver flake materials are the silver particles of choice in most compositions wherein one wishes to minimize silver content while achieving high conductivity.

Silver flake use in such applications is prepared by mechanical means and has been characterised by some contamination by lubricants such as fatty acids used in a flake-forming step and, it is supposed, by some morphological changes associated with work-hardening of the silver during the flake-formation process.

US—A—3992197 discloses the production of silver in the form of quite thin flat hexagonal crystals of relatively uniform size. These crystals are highly light-reflective and are used in cosmetics, nail polishes and decorative coatings.

The present invention set out to provide alternative forms of flakes whereby one or more drawbacks of the known flakes are avoided.

The present invention consists in a metal flake powder product comprising nonplanar flake-shaped particles of silver, gold or a metal of the platinum group, characterised in that said particles, where not folded back onto themselves have an average thickness of less than 0.2 µm and a bulk density of 0.15 to 0.85 g/cm³.

The metal flake powder of the invention can be used to make electroconductive compositions having a surprisingly low silver content in view of the ultimate electrical conductivity achievable with such compositions.

In general, the powder of the invention comprises particles so thin that they tend to be translucent. The particles are small, the median diameter usually ranging from 1 to 3 microns as measured using the well-known Coulter Counter technique wherein the powder is dispersed in a liquid medium and counted by optical means.

A totally unexpected advantage to the use of the novel silver flake is that high electroconductivities may be achieved in compositions comprising organic resin materials and silver flake at levels far below those necessary when the silver flake of the prior art has been used. This surprising result is apparently assignable to the geometry of the flake.

The metal flake of the invention is less than 0.2 µm thick and most advantageously about 0.1 µm thick or less. Individual flakes may appear to be folded back upon themselves.

Bulk density of the flake is in the range from 0.15 to 0.85 gram per cm³. The most preferred products seem to have bulk densities in the range of 0.15 to 0.5 gram per cm³.

The test is typical of those "tap" tests used in the art. Another such test is that using a commercially available volumeter test such as that known to the art as the Tap Pak Volumeter. The flake is often characterized by microhole structure, but this feature is believed to be characteristic of particular processing conditions and not to contribute to the particular value of the flake in imparting electroconductive properties to resin-based compositions.

A remarkable property of the flake is the efficiency by which it forms an electroconductive network in a non-conductive matrix. This appears to be a result of the geometry of the flake and its consequent movement and ultimate placement when it is mixed in various liquids. It is also possible that the process of preparation provides a particularly clean surface (for example, one free of contaminants such as oxide) which further enhances the electroconductive efficiency of the material.

Because of the flake's geometry, it is usually neither convenient nor economic to use the flake in those applications which require resistivities of less than about 1.0 ohm per linear inch (2.54 cm) of conductor using, as a defining model, a 0.050-inch (1.27 mm) wide conductor having a thickness of one mil (25.4 µm). However, when one is interested in achieving resistivities of, say, in the 3 to 20 ohms per inch (1.18—7.87 ohm.cm⁻¹) range, very great advantages are achieved. Indeed, such resistivities may be achieved at loadings of less than 60% by weight, based on the final coating weight, of silver flake in thin (say 1 to 5 mils or 25.4 to 127 µm thick) conductive coatings of the type laid down from a solvent-based coating composition, when only the flake and organic resin matrix are present in the coating after drying off the liquid vehicle.

The loading may be reduced to less than 50% by weight while still maintaining conductivity in bulk conductive plastic compositions as opposed to thin coatings.

The term "paste" used herein will connote those compositions known to the art which contain, in addition to a conductive powder, a sufficient quantity of liquid resins or solvent to impart a flowability, or at least a functional coatability to the composition. Such pastes are, very often, not themselves electroconductive but are convertible to electroconductive compositions by solidification of the paste by

2

chemical processes, or driving off the solvent. The 60% to 50% loading levels described above are based on solids in the cured or dried compound.

Although the loadings referred to above are based on weight, it should be understood that they represent silver and equivalent geometrically-effective patterns of other materials dispersed in the same matrices will contain greater or lesser weights of conductive filler, depending upon the density of each conductive filler.

A particularly advantageous aspect of the flakes of the invention is that, because of their ability to provide good conductivity at relatively low loadings, the physical properties of resin compositions in which they are incorporated are surprisingly good, in view of the conductivity levels which are achieved, when compared to conductive compositions prepared with previously-known metal fillers. Thus such mechanical properties as flexing characteristics and crease resistance can be improved while achieving excellent long-term electroconductive properties. The combination of such properties and conductivity for such low silver loadings is unprecedented.

Once the surprising advantage of a flake of such geometry is evident, there are believed to be many ways to prepare such an ultra thin flake. However, most such processes will be uneconomical. One process appears to be particularly desirable, i.e., the formation of the flake at the interface of a 2-phase reaction system. Such formation of the flake is contemporaneous with the formation of the metal, and thereby provides a flake without the need of first forming the metal and, only subsequently, subjecting the prior-formed metal to mechanical flake-shaping procedures.

US—A—3820979 discloses a process for producing a metal such as copper, silver or mercury in very pure form by precipitating the metal from an aqueous salt with a reduced quinonic compound in an organic solvent, which is immiscible with water.

According to a further aspect of the invention there is provided a process for producing a metal flake powder product, as defined above, which is characterised by forming and maintaining in a solution of a salt of the metal a dispersion of droplets or bubbles of a liquid or gaseous reducing agent which is substantially immiscible with said solution, the size of said droplets or bubbles being such as to give interfaces between the dispersed and continuous phases of an area such that said flake-shaped metal particles are formed at said interfaces, and recovering said metal flake powder from the dispersion.

It is advantageous if the dispersed phase of the reaction system is liquid. The reducing agent, on reaction with the metal ions in the continuous phase, causes the metal to plate out on the dispersed phase and, then, continuously break off to present new flake-forming interface to a new supply of silver ions.

There are a number of ways to maintain a suitable interface between the two liquid phases. Such an interface can for example be maintained by a density gradient in a centrifuge or by a physical phase difference in a spray-type system. However, a more economic method appears to be a simple stirred-reactor dispersion of droplets of a water-immiscible phase in an aqueous phase or the bubbling of a reducing gas into and through an aqueous phase.

One preferred method is to disperse a reducing agent such as benzaldehyde within an aqueous matrix in which the silver is dissolved and, subsequently, reacted out in flake form upon the benzaldehyde surface. Although such organic aldehydes as n-valeraldehyde, anisaldehyde, and benzaldehyde are particularly suitable reducing agents, it is noted that the reducing agent surface may be formed of other materials including aldehydes dissolved in a compatible hydrophobic base such as, for example, dodecane. Also some organo-group bearing hydrides can be dissolved in carriers which form a two-phase liquid system with water based metal-ion bearing solution.

The degree of dispersion of the reducing agent is believed to be important in determining flake quality and can be adjusted by agitation, or better, for any reasonable rate of agitation, by using an effective quantity of surfactive agent as a dispersing aid. In general, when using those preferred aldehyde reducing agents having only sparing water solubility, there will be a point where still additional surfactant will cause such great dispersion of the reducing agent that the flake character of the powder produced will diminish and the bulk density will increase rather sharply.

Lower bulk densities normally cannote a thinner, larger, and more pronounced flake-like character to the product.

To illustrate this point, in typical moderately-stirred systems utilizing the Span® 80 surfactant and the benzaldehyde/water system and described in the following Examples, the bulk density of the silver flake dropped from a level of about 1.1 grams per $cm^3$ with no surfactant to a level of about 0.2 with 6.0 grams of surfactant present, but the density rose to about 0.8 with 12 grams of surfactant present. The reaction system in which this demonstration was made had 60 grams of benzaldehyde and 1440 ml of water plus whatever water was carried into the system with requisite ammonium hydroxide and other reactants. The conclusion to be drawn from this information is that quality of particle shape can be substantially influenced by the degree of dispersion of the dispersed phase and that selection of a proper quantity of dispersing agent for a particular worker's agitation and reaction conditions can materially aid in maintaining a quality of dispersion which will yield a metal product of the particular characteristics desired. This is important when it is realized that many conductive compositions will utilize silver flake with apparent bulk densities of less than about 0.35 $g/cm^3$.

In order to point out more fully the nature of the present invention, the following working examples are

# 0 097 160

given as illustrative embodiments of the present process and products produced thereby. Preferred products in accordance with the invention are illustrated in the accompanying drawings wherein:

Figure 1 is a picture of a translucent silver flake of the invention magnified 12,000 times and photographed using an electron microscope and light transmitted through the sample.

Figure 2 is a picture of the same kind of flake magnified 24,000 times.

Figure 3 is a schematic picture depicting a "folded-back" aspect sometimes present in products of the invention.

Flake manufacture

## Example 1

A quantity of 0.5 grams of a sorbitan monooleate dispersing agent, a surfactant sold under the trade name Span 80 by Atlas Chemical Industries, Inc. and characterized by a viscosity of 1,000 cs at 25 degrees C was mixed with 5 grams of benzaldehyde. The resulting mixture was further mixed with 20 ml of distilled water obtaining a fine suspension of benzaldehyde droplets in water.

A quantity of 15 grams of silver nitrate was dissolved in 300 ml of distilled water. Then, 7.5 grams of potassium hydroxide was dissolved in the silver nitrate solution. Thereafter, just enough ammonium hydroxide solution was slowly mixed into the silver solution to, first, cause a precipitate and, then, to redissolve the precipitate. After the precipitate was redissolved, the solution was stirred with a magnetic-type laboratory agitator.

As the silver-bearing solution is stirred, moderately, the benzaldehyde suspension in mixture is added to and reacted with the silver-bearing solution, the mixing is continued for three minutes during which time silver flake is formed in the reaction mixture.

The silver flake is filtered out using a Buchner funnel and vacuum. The resulting flake is rinsed several times with water, several more times with acetone, and thin air dried. The resulting powder is, on examination, discovered to be a foraminous, ultra thin and translucent silver flake of exceptionally low bulk density.

## Example 2

Following the general procedure of Example 1, 360 grams of silver nitrate was dissolved in 2.4 liters of water. A quantity of 119 grams of KOH was added and, then, enough NH4OH solution was added to cause dissolution of precipitate.

Twelve grams of monooleate surfactant was mixed with 120 grams of benzaldehyde in 480 ml of water. Thereupon 120 grams of triethanolamine was added to 180 ml of water in a separate receptacle. Also 60 ml of concentrated (37%) formaldehyde was separately diluted with 240 ml of water.

The silver bearing solution was placed in a four-liter reactor and, then the benzaldehyde mixture was added thereto with good, but not violent, agitation. Mixing was continued for 10 minutes; then, the triethethanolamine solution was added. Again, mixing continued for 10 minutes. Then, the formaldehyde solution was added.

(Care should be taken with any combination of reaction vessel and agitation to avoid such vigorous agitation that undesirable comminution of the flake results.)

After another 10 minutes, the reaction mix was filtered to recover the silver flake. It was washed four times, each time with 1 liter of distilled water. The water-washed flake was then washed three more times with denatured alcohol. The resulting silver-flake formed a filter cake which was redispersed in 600 ml of denatured alcohol by two minutes agitation in a Waring Blendor. The silver flake was again filtered, washed with denatured alcohol and mixed with 200 ml of dichloromethane containing 4 grams of stearic acid. Then it was air dried. The flake had an apparent denisty of 0.29 grams per cubic centimeter. It was ultra thin.

## Example 3

A quantity of 15 grams of silver nitrate was added to 300 ml of water and 7.5 grams of KOH was added to the vessel and sufficient concentrated ammonium hydroxide was added to dissolve all precipitates. Ten grams of 10% silver nitrate solution was added to this solution.

Then 0.5 grams of the sorbitan monooleate surfactant was added to 5.0 grams of benzaldehyde and then mixed in 20 mls. of distilled water.

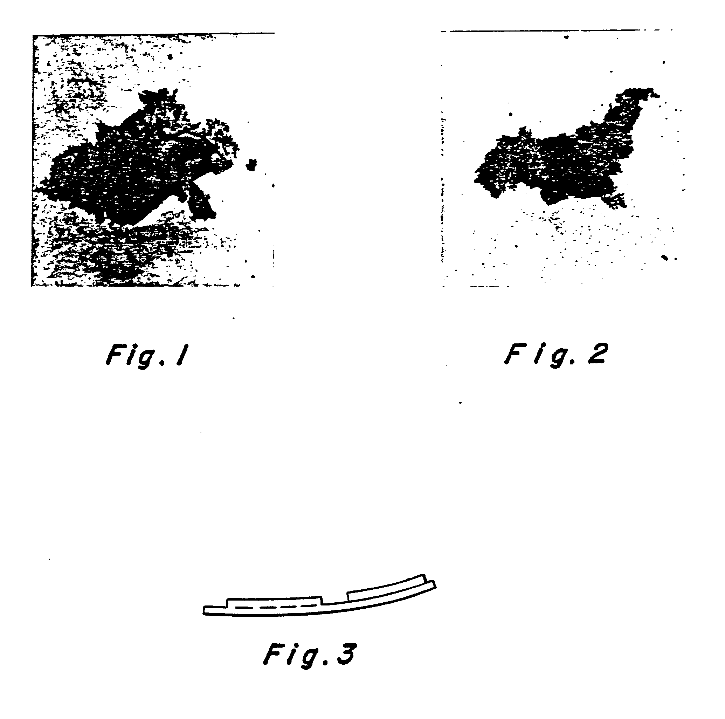

The benzaldehyde mixture was added to the silver bearing solution using moderate stirring and mixed for four minutes. The mix is then filtered, washed several times with water and several more times with denatured alcohol. About 0.2 grams of stearic acid was added to the alcohol—wet cake in a methylene chloride solution. The silver flake is then air-dried in a polyethylene sheet. A low density flake is obtained. The flake is pictured in Figures 1 and 2.

## Example 4

Ninety grams of silver nitrate is dissolved in 900 mls, of H2O, and 300 ml of concentrated ammonium hydroxide is added to form a silver-bearing mixture.

Seventy grams of NaOH is dissolved separately in 300 ml of water and cooled to 30 degrees C.

Three grams of the sorbitan monooleate dispersant and 60 grams of benzaldehyde are dispersed in 240 ml of water.

4

**0 097 160**

The NaOH solution is added to a 2-liter beaker containing the silver-bearing solution with low speed mixing imparted by a turbine blade. After addition and one minute of mixing, the benzaldehyde dispersion is added and mixed for 65 minutes. The resulting flake is filtered, washed with four 500 ml portions of distilled water, and two 400 ml portions of isopropanol. The flake was dispersed in 300 ml of isopropanol, refiltered, washed again with two 400 ml portions of isopropanol, and, while still wet, treated with 1 gram of stearic acid dissolved in 50 ml of methylene chloride. After drying, the yield based on silver was 57.9 grams and the apparent density was 0.27 grams per cm$^3$.

Example 4A

The flake of Example 4 is mixed into the following composition.

| | |
|---|---|
| 5.4 grams | epoxy resin sold under trade designation 27-140 by Reichold Chemical Co. |
| 0.6 grams | of an epoxy diluent sold by Reichold under the trade designation 37-058 |
| 4.0 grams | silver flake |
| 0.9 grams | tetraethylenepentamine (TEPA) |

The formulation is cured at 96 degrees F (35.5°C) for 40 minutes.

Volume resistivity of a cylinder (about 1/4 inch in diameter) was 0.03 ohm-cm.

A coating of this formulation of 0.012 inch (0.3 mm) thick was 0.17 ohm/square in surface resistivity.

It is to be noted that the weight loading of this material was only 36.7% silver. At these loading levels such prior art silver flake materials as that solder under the trade designation Sil-Flake 135 by Handy and Harmon Co. have no ability to impart any conductivity at all.

Example 5

A flake was prepared according to Example 4, except no stearic acid was added. Fifty grams of an acrylic resin, sold under the trade name Acryloid®55D-42 by Rohm and Haas Co., was dissolved in 200 ml butyl acetate and mixed with the flake after the flake had been wetted with butyl acetate solvent. The resultant paint was coated on a polyethylene, i.e., an insulator, surface and air dried to a 1 mil thick coating which, on drying, exhibited an electrical surface resistivity of less than 0.1 ohm (per square).

Example 6

The material of Example 2 is mixed into a conventional resin system including the following mixture: an epoxy sold by Shell Chemical Co. under the trade designation EPON® 828 and consisting of 33.6 grams flake and 54 grams EPON 828 and 6 grams of butyl glycidyl ether diluent.

Five grams of the mixture were further mixed with 0.45 gram TEPA curing agent and cured overnight at room temperature. The resulting epoxy resin system had good electrical conductivity.

Example 7

This example describes the applicability of the process of the invention to other noble metals:

Two grams of HauCl4 o 3H2O was dissolved in 30 ml H2O.

Separately, 2 grams of NaOH is dissolved in 10 ml H2O.

Separately, also, 5 grams of benzaldehyde and 0.5 grams of the monooleate dispersing agent are mixed with 20 ml of H2O.

The gold-bearing solution is mixed with the sodium hydroxide using a magnetic lab stirrer. Five mls. of the benzaldehyde mixture is then added and mixed for 5 minutes. Gold powder forms and is filtered, washed with water and acetone and air dried. The product has good electrical conductivity.

Example 8

Ninety grams of silver nitrate was dissolved in 1200 ml of distilled water. Then 45 grams of KOH was added as was enough concentrated ammonium hydroxide to dissolve any precipitate.

Separately, three grams of the monoleate surfactant sold under the designation of SPAN 80 and 55 grams of n-valeraldehyde were mixed with 240 ml of distilled water.

Then, with a low mixing speed, on the aldehyde-bearing mixture is added to a 2 liter breaker and mixed for 65 minutes. Silver flake precipitated and was washed four times with 500 ml quantities of distilled water, then washed twice more with 40 ml quantities of denatured alcohol. The silver flake was redispersed and treated with 1 gram of stearic acid dissolved in 50 ml of methylene chloride before being air dried.

The yield of silver-flake product was 56.9 grams. Apparent density was 0.59 grams per cubic centimeter.

5

Example 9

Forty grams of silver nitrate were dissolved in 800 ml of water. Twenty grams of KOH were then added to the silver solution. Again, enough ammonium hydroxide was added to redissolve precitate.

Separately, 1.4 grams of a surfactant (a nonionic ester formed by the reaction of ethylene oxide with refined commercial mixtures of unsaturated fatty acids and heterocyclic resin acids) available under the trademark Renex® 20 from Atlas Chemical Industries, Inc., is mixed with 14 grams of benzaldehyde in 56 ml of water. Renex 20 is characterized by an HLB value of 13.5 (compared to a value of 4.3 for the Span 80 monoleate).

Thereupon, 35 ml of concentrated (37%) formaldehyde solution and 35 ml of water were mixed together in a third vessel.

With only moderate stirring from a magnetic-type stirring rod, the aldehyde-bearing mix was added quickly to the silver-bearing mix and stirred for ten minutes. Then the formaldehyde-bearing mix was added and stirring continued for another twenty minutes. The resulting silver powder was washed with water and alcohol and air dried.

An electrically conductive composition was formed by mixing 19 grams of a commercially-available, one-component epoxy sold under the trade designation Uniset® A312 by Amicon Corp. with 9 grams of the silver flake. The composition was cured on a hot plate for 10 minutes at 300 degrees F (149°C).

Figures 1 & 2 illustrate two flakes of the invention. While the translucent nature of the flake is shown, it is to be noted there are relatively opaque areas which show a "folded-back" effect. It is believed this effect helps the flakes avoid non-conductive parallel relationships in resin-based compositions. Figure 3 shows the effect schematically from the side. The transparent portion of the flake is less than about 0.15 µm in thickness, while the average thickness is about 0.2 µm or less.

In preferred embodiments of the invention, some curvature of the flake is believed to aid the excellent electroconductive efficiency when the flake is used to make electroconductive compositions.

## Claims

1. A metal flake powder product comprising nonplanar flake-shaped particles of silver, gold or a metal of the platinum group, characterised in that said particles, where not folded back onto themselves, have an average thickness of less than 0.2 µm and a bulk density of 0.15 to 0.85 g/cm³.

2. A metal flake powder product according to Claim 1, characterised in that the metal is silver.

3. A metal flake powder product according to Claim 1 or Claim 2, characterised in that the metal particles have a median diameter of 1 to 3 µm as measured by the Coulter counter technique.

4. A metal flake powder product according to any preceding claim, wherein said bulk density is less than 0.5 g/cm³.

5. A metal flake powder product according to any preceding claim wherein the said average thickness of the metal particles is less than 0.1 µm.

6. A paste composition comprising a metal flake powder product according to any preceding claim and an organic resin matrix.

7. An electroconductive composition comprising an organic resin matrix and, dispersed in said matrix, metal flake particles according to any one of Claims 1 to 5, forming an electroconductive path therein.

8. An electroconductive composition according to Claim 7, characterised in that the metal flake particles are translucent when viewed in transmitted light.

9. An electroconductive composition according to Claim 7 or Claim 8, characterised in that the metal flake particles are present in an amount less than 50 wt.% based on the total of the organic resin and the particles.

10. A coating having a removable liquid vehicle, of less than 12 mils (304.8 µm) thickness, and dryable to form an electroconductive composition according to any one of Claims 7 to 9, and comprising an organic resin matrix having dispersed therein metal flake particles in an amount less than 60 wt.% based on the total of the organic resin and the flake.

11. A process for producing a metal flake powder product according to any one of Claims 1 to 5, which is characterised by forming and maintaining in a solution of a salt of the metal a dispersion of droplets or bubbles of a liquid or gaseous reducing agent which is substantially immiscible with said solution, the size of said droplets or bubbles being such as to give interfaces between the dispersed and continuous phases of an area such that said flake-shaped metal particles are formed at said interfaces, and recovering said metal flake powder from the dispersion.

12. A process according to Claim 11, wherein solution of the metal salt is an aqueous solution and the reducing agent is a water-immiscible liquid aldehyde.

13. A process according to Claim 11 or Claim 12, wherein the reducing agent is dispersed with an amount of a surfactant sufficient to maintain a dispersion having the required interface area for flake formation.

## Patentansprüche

1. Metallblättchenpulverprodukt, das nichtplanare, blättchenförmige Partikel aus Silber, Gold oder

6

einem Metall der Platingruppe enthält, dadurch gekennzeichnet, daß die Partikel, wo sie nicht gegen sich selbst umgefaltet sind, eine Durchschnittdicke von weniger als 0,2 µm und eine Schüttdichte von 0,15 bis 0,85 g/cm³ aufweisen.

2. Metallblättchenpulverprodukt nach Anspruch 1, dadurch gekennzeichnet, daß das Metall Silber ist.

3. Metallblättchenpulverprodukt nach Anspruch 1 oder 2, dadurch gekennzeichnet, daß die Metallpartikel einen mittleren Durchmesser von 1 bis 3 µm, gemessen nach der Coulter-Zähltechnik, aufweisen.

4. Metallblättchenpulverprodukt nach einem der vorangehenden Ansprüche, dadurch gekennzeichnet, daß die Schüttdichte weniger als 0,5 g/cm³ beträgt.

5. Metallblättchenpulverprodukt nach einem der vorangehenden Ansprüche, dadurch gekennzeichnet, daß die genannte Durchschnittsdicke der Metallpartikel kleiner als 0,1 µm ist.

6. Pastenzusammensetzung, die ein Metallblättchenpulverprodukt nach einem der vorangehenden Ansprüche und ein organische Harzmatrix enthält.

7. Elektroleitende Zusammensetzung, die eine organische Harzmatrix und in dieser Matrix dispergierte Metallblättchenpartikel nach einem der Ansprüche 1 bis 5 enthält, die einen elektrisch leitenden Weg darin bilden.

8. Elektroleitende Zusammensetzung nach Anspruch 7, dadurch gekennzeichnet, daß die Metallblättchenpartikel bei Betrachtung in durchtretendem Licht durchsichtig sind.

9. Elektroleitende Zusammensetzung nach Anspruch 7 oder 8, dadurch gekennzeichnet, daß die Metallblättchenpartikel mit einem Betrag von weniger als 50 Gew.-%, bezogen auf die Gesamtheit von organischem Harz und der Partikel, vorhanden sind.

10. Überzug mit einer Dicke von weniger als 12 mils (304,8 µm), der einen entfernbaren, flüssigen Bestandteil enthält und trocknungsfähig ist, um eine elektroleitende Zusammensetzung nach einem der Ansprüche 7 bis 9 zu bilden, und der eine organische Harzmatrix aufweist, die darin dispergierte Metallblättchenpartikel mit einem Betrag von weniger als 60 Gew.-%, bezogen auf die Gesamtheit von organischem Harz und der Partikel, enthält.

11. Verfahren zum Herstellen eines Metallblättchenpulverproduktes nach einem der Ansprüche 1 bis 5, gekennzeichnet, durch Bilden und Aufrechterhalten einer Dispersion aus Tröpfchen oder Bläschen aus einem flüssigen oder gasförmigen Reduktionsmittel in einer Lösung eines Salzes des Metalls, wobei das Reduktionsmittel mit der Lösung im wesentlichen nicht mischbar ist und wobei die Größe der Tröpfchen oder der Bläschen so ist, daß zwischen den dispergierten und kontinuierlichen Phasen eines Bereiches Zwischenflächen entstehen, derart, daß die blättchenförmigen Metallpartikel an diesen Zwischenflächen gebildet werden, und durch Gewinnen des Metallblättchenpulvers aus der Dispersion.

12. Verfahren nach Anspruch 11, dadurch gekennzeichnet, daß die Lösung des Metallsalzes eine wässrige Lösung ist und daß das Reduktionsmittel ein mit Wasser nicht mischbares, flüssiges Aldehyd ist.

13. Verfahren nach Anspruch 11 oder 12, dadurch gekennzeichnet, daß das Reduktionsmittel mit einem Betrag eines oberflächenaktiven Mittels dispergiert ist, der zum Aufrechterhalten einer Dispersion mit dem erforderlichen Zwischenflächenbereich zur Blättchenbildung ausreicht.

## Revendications

1. Produit de poudre métallique en paillettes, comprenant des particules non planaires, en forme de paillettes, d'argent, d'or ou d'un métal du groupe du platine, caractérisé par le fait que, lorsqu'elles sont repliées sur elles-mêmes, lesdites particules ont une épaisseur moyenne inférieure à 0.2 µm et une masse volumique en vrac comprise entre 0.15 et 0.85 g/cm³.

2. Produit de poudre métallique en paillettes, selon la revendication 1, caractérisé par le fait que le métal est de l'argent.

3. Produit de poudre métallique en paillettes, selon revendications 1 ou 2, caractérisé par le fait que les particules métalliques ont un diamètre moyen de 1 à 3 µm, mesuré selon la technique du compteur Coulter.

4. Produit de poudre métallique en paillettes, selon l'une des revendications précédentes, dans lequel ladite masse volumétrique en vrac est inférieure à 0.5 g/cm³.

5. Produit de poudre métallique en paillettes, selon l'une des revendications précédentes, dans lequel ladite épaisseur moyenne des particules métalliques est inférieure à 0.1 µm.

6. Composition de pâte contenant un produit de poudre métallique en paillettes selon l'une des revendications précédentes, et une matrice de résine organique.

7. Composition électroconductrice contenant une matrice en résine organique et, dispersées dans ladite matrice, des particules de métal en paillettes selon l'une des revendications 1 à 5, y formant une voie électroconductrice.

8. Composition électroconductrice selon la revendication 7, caractérisée par le fait que les particules de paillettes métalliques sont transparentes lorsqu'on les regarde en lumière transmise.

9. Composition électroconductrice conformément à la revendication 7 ou à la revendication 8, caractérisée par le fait que les particules de paillettes métalliques représentent moins de 50% en poids du poids total de la résine organique et des particules.

10. Revêtement ayant un véhicule liquide séparable, d'épaisseur inférieure à 304.8 µm, pouvant sécher pour donner une composition électroconductrice selon l'une quelconque des revendications 7 à 9, et contenant une matrice en résine organique dans laquelle sont dispersées des particules métalliques en paillettes pour représenter moins de 60% du poids total résine organique et paillettes.

11. Procédé de fabrication d'un produit de poudre métallique en paillettes selon l'une quelconque des revendications 1 à 5, caractérisé par le fait que, dans une solution d'un sel du métal, on produit et on maintient une dispersion de gouttelettes ou de bulles d'un réducteur liquide ou gazeux, qui est réellement immiscible dans ladite solution, la taille desdites gouttelettes ou bulles étant telle que des interfaces sont produites entre les phases dispersées et les phases continues d'une zone telle que lesdites particules métalliques en forme de paillettes se forment sur lesdites interfaces et que l'on collecte ladite poudre métallique en paillettes à partir de la dispersion.

12. Procédé selon la revendication 11, dans lequel la solution de sel métallique est une solution aqueuse et le réducteur est un aldehyde liquide immiscible dans l'eau.

13. Procédé selon la revendication 11 ou la revendication 12, selon lequel le réducteur est dispersé au moyen d'une quantité de tensio-actif suffisante pour donner une dispersion présentant les espaces d'interface nécessaires pour la formation de paillettes.

Fig. 1

Fig. 2

Fig. 3